# EUROPEAN PATENT SPECIFICATION

(11) **EP 2 585 883 B1**
(45) Date of publication and mention of the grant of the patent: **20.02.2019**
(21) Application number: 11751932.2
(22) Date of filing: 23.06.2011
(51) Int. Cl.: G05B 15/00, G07F 11/50

(54) **VERIFICATION DEVICE TO VERIFY A CONTAINER AND THE CORRECT POSITIONING OF SAID CONTAINER AND RELATIVE METHOD**
PRÜFVORRICHTUNG ZUR PRÜFUNG EINES BEHÄLTERS UND KORREKTE POSITIONIERUNG DIESES BEHÄLTERS SOWIE ZUGEHÖRIGES VERFAHREN
DISPOSITIF DE VÉRIFICATION SERVANT À VÉRIFIER UN RÉCIPIENT ET LE POSITIONNEMENT CORRECT DUDIT RÉCIPIENT, ET PROCÉDÉ CORRESPONDANT

(30) Priority: 24.06.2010 IT UD20100128
(43) Date of publication of application: 01.05.2013
(73) Proprietor: COROB S.p.A., 41038 San Felice sul Panaro (MO) (IT)
(72) Inventor: BERTOLI, Mirko, 41036 Medolla (IT)
(74) Representative: Petraz, Gilberto Luigi
(86) International application number: PCT/IB2011/001470
(87) International publication number: WO 2011/161534

(56) References cited:
- EP-A2- 1 589 469
- US-A- 5 625 198
- US-A1- 2003 189 713
- US-B1- 6 169 597
- US-B1- 6 595 250

## Description

### FIELD OF THE INVENTION

The present invention concerns a device for the verification of a receptacle and the correct positioning of the receptacle and the relative method, used for example but not restrictively in a machine at least for the delivery, and possibly for the automatic preparation and distribution, of fluid coloring products, for example coloring liquids, bases for paints, varnishes, enamels, inks or other fluid coloring substances, each contained in a closed receptacle, such as for example any container whatsoever, of any shape and size, provided with a lid.

### BACKGROUND OF THE INVENTION

Machines are known for dispensing or delivering coloring products, able to introduce a dosed quantity of coloring pigments into a receptacle containing a paint base, in order to obtain a desired coloring product. Normally, receptacles of different sizes and shapes exist, which can contain different fluid products. In the machines in question it is often necessary for a user or operator to manually load the chosen receptacle, generally containing a paint base, so that it can be processed, typically by injecting inside it the desired colored pigments by means of a delivery device with needles, possibly then mixed and then supplied to the user. This loading operation requires not only that the content of the receptacle is correct, in order to obtain the desired final product, but also that the receptacle is correctly positioned and centered, so that it can cooperate correctly and safely with the delivery device.

Document US-B-6,595,250 describes a system for filling a fluid into a receptacle, provided with a filling unit having a filling head and repositionable with respect to a filling station provided with a linear conveyor to feed the receptacle to be filled. The filling station has a filling position equipped with a weight sensor that detects the weight of the receptacle which on each occasion is fed linearly along the conveyor. A pneumatic contact switch is also provided, or a magnetic proximity sensor, which, according to a signal from the weight sensor that detects a possible empty container in the filling position, can be actuated by means of a bar so as to open and close one or more pneumatic lines connected to the filling head of the filling unit when it is situated above the filling position, so as to pass from a no-flow condition to a condition in which the fluid is delivered into the receptacle. However, this known system does not provide to verify the centering and position of the container to be filled, nor the type of receptacle to be filled.

Purpose of the present invention is to achieve a verification device to verify the receptacle, in the sense of verifying the sizes of the receptacle and type of content, and also the correct positioning and centering of the receptacle that is loaded by the user into the machine as above.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purpose, a verification device to verify at least the correct position and type of a closed receptacle according to the present invention is used in a machine for the delivery, and possibly for the automatic preparation, mixing and distribution, of at least a fluid product into the closed receptacle, for example in order to deliver a fluid coloring product into a receptacle containing a paint base.

The verification device comprises a loading plate for the receptacle, rotation means able to determine at least a rotation of the loading plate around a vertical central axis of symmetry and position sensor means, suitable to detect the position of the receptacle disposed on the loading plate and to transmit a relative signal. The position sensor means are suitable at least to measure the distance between the wall of the receptacle that on each occasion arrives facing the position sensor means during the rotation and the position sensor means themselves, in order to determine at least a profile or shape of the receptacle.

The verification device also comprises control means suitable to coordinate the functioning of the rotation means and the position sensor means so as to derive, from the signals received from the position sensor means, at least the actual shape and position of the receptacle disposed on the loading plate.

Moreover, the control means are able to compare the signals received from the position sensor means and information relating at least to the expected shape and position of the receptacle and its content on each occasion preloaded by the user and/or found automatically so as to selectively command, according to the result of such comparison, subsequent work steps, such as the delivery of colored pigments into the receptacle.

With the present invention it is therefore possible to verify that the receptacle has been correctly positioned by the user on the loading plate, before subjecting it to the delivery step.

In some forms of embodiment, the sensor means comprise at least a position sensor.

In other forms of embodiment, the sensor means comprise two sensors disposed on diametrically opposite sides with respect to the loading plate.

In some forms of embodiment, the rotation determined by the rotation means is at least 360°.

In some forms of embodiment, the verification device also comprises electronic reading means, controlled by the control means, to read an identification code, such as a bar code, an RFID tag or suchlike, carrying information regarding the receptacle (typically its volume) and its content (type of fluid product) applied on the receptacle.

The rotation upon itself of the receptacle supported by the loading plate allows that the position on the loading plate and the volume, understood as the external geometric shape of the receptacle, can be determined by the position sensor means.

The signals deriving from the position sensor means are compared, by means of the control means, with the information regarding the receptacle and its content, pre-loaded by the user and/or for example read by the electronic reading means. If the signals relating to the position and possibly the external shape of the receptacle are compatible with the information possessed by the control means, the latter give their consent for the operations to continue, otherwise the user is informed of the fact, or in any case the delivery process is not started.

In some forms of embodiment, the loading plate is provided with a plurality of housing and centering seatings in order to center the receptacle, having sizes decreasing from the periphery toward the center and possibly having different shapes so as to adapt to the different series of receptacles present on the market.

The present invention also concerns a method to verify at least the type of closed receptacle and the correct positioning of the receptacle used in a machine at least for the automatic delivery of at least a fluid product into the closed receptacle, which comprises:
- a step of loading the receptacle onto a loading plate;
- a step of rotating the loading plate on which the receptacle is disposed, around a vertical central axis of symmetry;
- a step of automatically detecting the position of the receptacle on the loading plate, made during the rotation step in which position sensor means are used, suitable at least to measure the distance between the wall of the receptacle which arrives on each occasion facing toward the position sensor means during the rotation and the position sensor means themselves, so as to determine a profile of the receptacle;
- a step in which, from the signals received from the position sensor means, at least the actual shape and position of the receptacle disposed on the loading plate are derived;
- a step of automatically comparing information pre-loaded or found and regarding at least the expected shape and position of the receptacle and its content and the position of the receptacle detected in the automatic detection step, according to which comparison the subsequent work steps are commanded.

In some forms of embodiment of the present invention, the method also comprises a step of reading an identification code associated with the receptacle in order to derive information regarding the receptacle and its content. In this case, the automatic comparison step is carried out between the information found in the reading step and the position of the receptacle as detected in the automatic detection step.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a schematic view of a machine according to the present invention for the automatic distribution of fluid coloring products contained in receptacles;
- fig. 2 is a schematic view from above of the machine in fig. 1;
- fig. 3 is a front enlarged view of a first detail of the machine in fig. 1;
- fig. 4 is a schematic view of a label printed by the machine in fig. 1;
- fig. 5 is a perspective view of a shelf on which the receptacles used by the machine in fig. 1 are stored;
- fig. 6 is a second detail, enlarged and sectioned, of the machine in fig. 1;
- fig. 7 is a plane view of part of the machine in fig. 1;
- fig. 8 is a right side view, enlarged and partly sectioned, of the machine in fig. 1 in a first operating condition;
- fig. 9 is a right side view, similar to the one in fig. 8, of the machine in fig. 1 in a second operating condition;
- fig. 10 is a view in the event of a positive result of the verification with the verification device according to the present invention;
- fig. 11 is a view in the event of a negative result of the verification with the verification device according to the present invention.

To facilitate comprehension, the same reference numbers have been used, where possible, to identify identical common elements in the drawings. It is understood that elements and characteristics of one form of embodiment can conveniently be incorporated into other forms of embodiment without further clarifications.

### DETAILED DESCRIPTION OF A PREFERENTIAL FORM OF EMBODIMENT

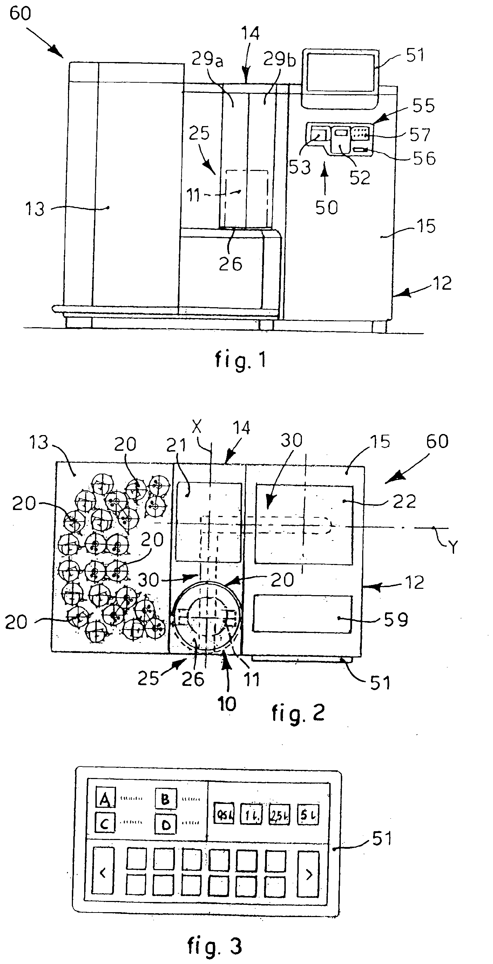

With reference to fig. 1, according to the present invention a verification device 10 to verify a receptacle 11 and its correct positioning by a user is used for example in a machine at least for the automatic delivery of fluid coloring products, contained in closed receptacles 11, such as for example the machine 60 in figs. 1 and 2.

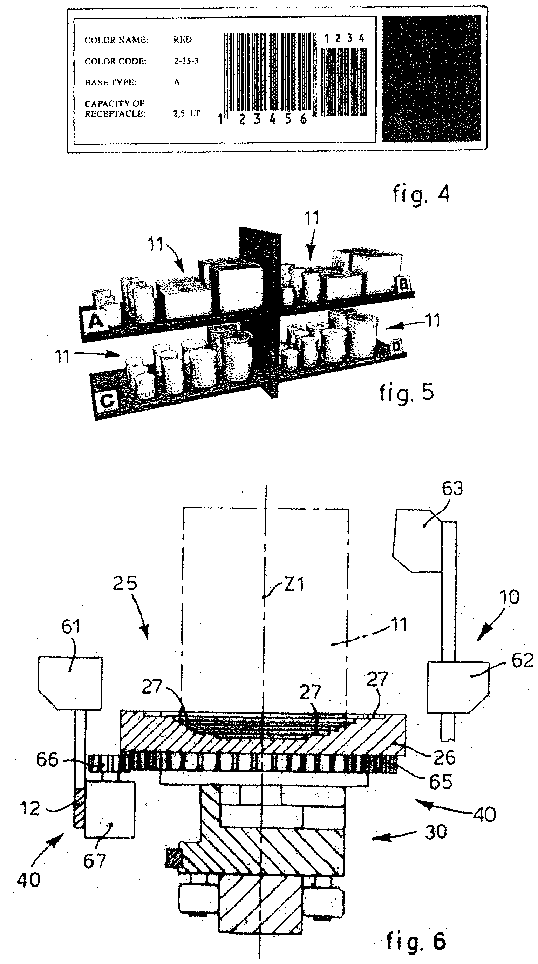

The receptacles 11 (fig. 5) can be either metal, such as steel, or plastic material and can be a cylindrical shape or any other shape, such as for example a parallelepiped, with a square or rectangular base.

Each of them contains a fluid paint base, which can be for example transparent or white, to which a colorant is then added, substantially consisting of pigments. Each receptacle 11 is closed by a lid provided at the center with a membrane, of a known type, which has the characteristic of being holed by one or more needles and closing automatically when each needle is removed.

The verification device 10 comprises a loading plate 26 on which the receptacle 11 is located, having a vertical axis Z1, and a system for reading the size and position, in this case comprising position sensor means 61, 62, suitable to detect the position of the receptacle 11 on the loading plate 26 and to transmit relative signals.

In some forms of embodiment the position sensor means 61, 62 comprise at least a position sensor 61, 62.

In other forms of embodiment, the position sensor means 61, 62 comprise at least two position sensors 61, 62, disposed in fixed positions on diametrically opposite sides with respect to the vertical axis Z1, just above the loading plate 26.

The position sensor means 61, 62 comprise for example sensors suitable to measure the distance between the wall of the receptacle 11 that gradually arrives at the sensor and the sensor itself. By making the receptacle 11 rotate upon itself, advantageously by 360°, the sensors can thus determine, precisely and reliably, a complete profile and the shape of the receptacle 11, consequently verifying the position thereof.

In some forms of embodiment, the verification device 10 also comprises an electronic reader 63 of bar codes or RFID tags, disposed in a fixed position above the sensor 62. The electronic reader 63 can be the optical type, in the case of reading bar codes, or a reader of RFID tags.

The position sensor means 61, 62 and the electronic reader 63 of bar codes or RFID tags are connected to a central control unit 59.

The central control unit 59 is able to derive the shape of the receptacle 11 from the signals received from the position sensor means 61, 62 and to compare it with the expected shape and position of the receptacle. In some forms of embodiment, the comparison of the expected position and the detected position is carried out according to the signals deriving from the position sensor means 61, 62 compared with the information detected by the electronic reader 63, or with pre-loaded information.

In some forms of embodiment, the verification device 10 also comprises rotation means 40 able to determine a rotation, for example of at least 360°, of the loading plate 26 around a vertical central axis of symmetry, and hence of the receptacle 11 located on it.

In some forms of embodiment, the rotation means 40 comprise an idle transmission member temporarily connected to a drive member. In some forms of embodiment, the idle transmission member comprises a toothed wheel 65, attached coaxially to the lower part of the loading plate 26 and temporarily engaging with a toothed pinion 66 which acts as a drive member, in turn keyed onto the shaft of a motor 67, for example electric or other type, attached to the structure 12 of the machine 10 and commanded by the central control unit 59.

The central control unit 59 is able to coordinate the functioning of the rotation means 40 and the position sensor means 61 and 62 and possibly also of the electronic reader 63. Furthermore, the central control unit 59, according to the signals received from the position sensors 61 and 62 and to information regarding the receptacle and its content on each occasion pre-loaded by the user and/or found automatically, for example by means of the electronic reader 63, is able to signal to the user possible anomalies in the receptacle 11 or its position, consequently commanding, or not, the subsequent work steps, such as the delivery of colored pigments.

The rotation upon itself of the receptacle 11 supported by the loading plate 26 allows the volume, understood as the external geometric shape of the receptacle 11, to be completely read and determined by the position sensor means 61, 62.

The correlated signals deriving from the position sensor means 61, 62 are compared, by means of the central control unit 59, with the information regarding the receptacle 11 and its content, pre-loaded by the user and/or for example read automatically by the electronic reader 63. If the signals relating to the external shape of the receptacle 11 are compatible with the information possessed by the central control unit 59, the latter gives its consent for the operations to continue, otherwise the user is informed of the fact, or in any case the delivery process is not started.

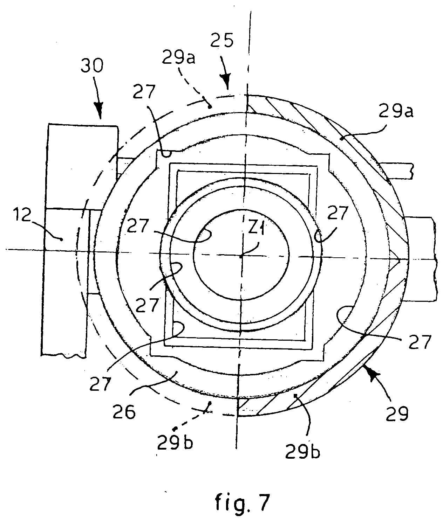

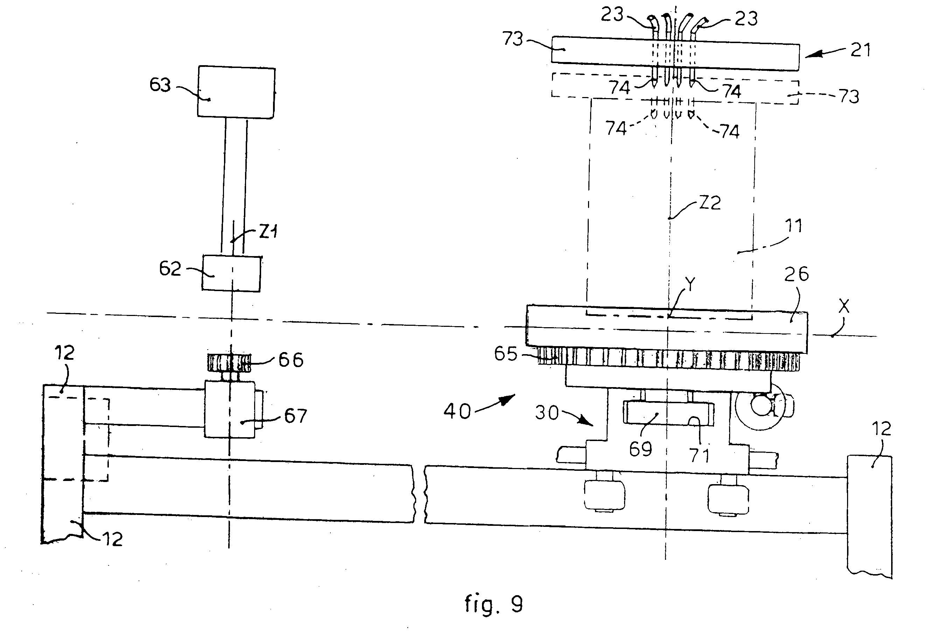

In some forms of embodiment, the upper part of the loading plate 26 (figs. 6, 7, 8 and 9) is provided with a plurality of seatings 27 with decreasing steps from the periphery toward the center and having a circular or rectangular design with the sizes of the bases of the different receptacles 11 that the machine 60 can process. In some forms of embodiment, not restrictive of the field of the present invention, the seatings 27 are in this case seven in number. To optimize space, in some cases, as can be seen in fig. 7, two different seatings, one circular and one rectangular, intersect on the same horizontal plane.

In the attached drawings, as an example of an application that does not restrict the field of protection of the present invention, the verification device 10 is shown, used in a machine 60 for the automatic preparation and distribution of fluid coloring products contained in closed receptacles 11 which, in this case, comprises a support structure 12, divided substantially into three modular compartments 13, 14 and 15, integrated with each other, as described in Applicant's co-pending Italian patent application n. UD2010A000126 with the same priority date and entitled: "MACHINE FOR THE AUTOMATIC PREPARATION AND DISTRIBUTION OF FLUID COLORING PRODUCTS CONTAINED IN CLOSED RECEPTACLES".

In the first compartment 13, which is the one on the extreme left in figs. 1 and 2, a plurality of tanks 20 are disposed (fig. 2), which can be of any known type, for example as described in the European patent EP-B-1.744.826, in the name of the present Applicant, in each of which a different coloring substance is contained.

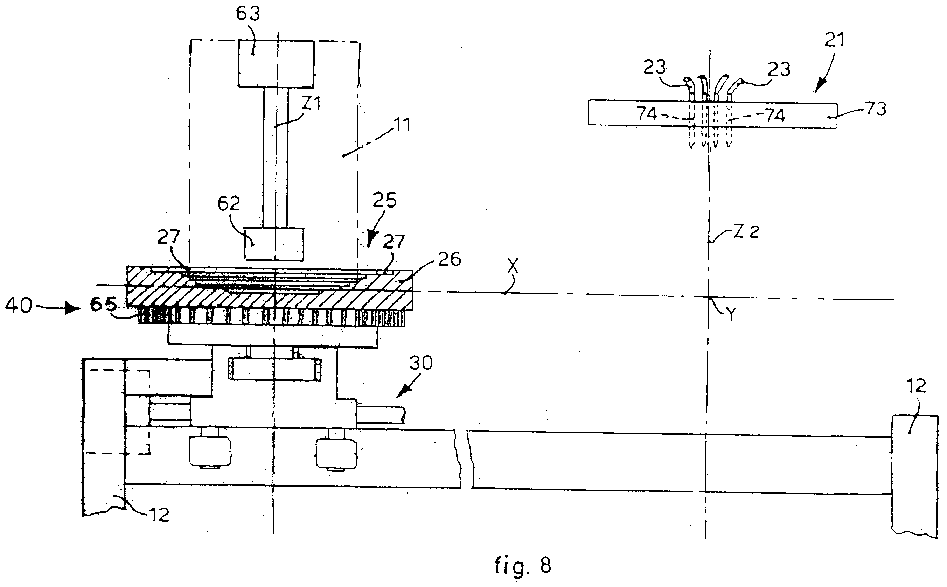

In the second compartment 14, that is, the central one, a delivery device 21 is disposed, which can be of any known type, for example as described in the Italian patent IT-B-1.370.076, in the name of the present Applicant. The delivery device 21 is connected to the tanks 20 by means of pipes 23 (fig. 8) of any known type. For example, in the case shown in the attached drawings, the delivery device 21 comprises a plate 73 on which a plurality of needles 74 are mounted, disposed parallel and concentric to the vertical axis Z2 and each connected to a corresponding pipe 23. The plate 73 is mobile vertically along the vertical axis Z2 by means of an electric motor, of a known type and not shown in the drawings, also controlled by the central control unit 59.

In the third compartment 15 (fig. 2), that is, the one on the extreme right, a mixing device 22 is disposed, which can be of any known type, for example as described in the European patent EP-B-1.417.024, in the name of the present Applicant.

In the front part or front-piece of the central compartment 14 a loading station 25 is provided (fig. 2, 6, 7 and 8), in which the loading plate 26 is positioned, for example circular in shape, which functions as a support element and as a centering member for one receptacle 11 at a time.

Around the loading plate 26 and coaxial with the axis Z1, an access door 29 is disposed, semi-circular in shape and comprising in some forms of embodiment two panels 29a and 29b, each of which has an angular development of 90°, so as to define a bushing rotating around the vertical axis Z1, and to prevent in any case the user from introducing his hands or other inside the machine 60, beyond the loading station 25.

Transfer means 30 (figs. 2, 6, 7 and 8) are able to transfer the receptacle 11 selectively and automatically, together with the loading plate 26, both from the loading station 25 to the delivery device 21, along a first horizontal axis X, and from the delivery device 21 to the mixing device 22, along a second horizontal axis Y, perpendicular to the axis X, and vice versa, in order to return them to the loading station 25.

On the front part of the right-hand compartment 15 (fig. 1) data input means 50 are disposed, which in this case comprise an interactive screen 51, of the touch screen type, a label printer 52, an electronic code reader 53, for example bar codes or RFID tags, and a possible device for electronic payment 55, which in turn comprises an electronic reader of electronic payment cards 56, such as for example ATM cards, credit cards or pre-paid cards, and a numerical keyboard 57. Each of the data input means 50 is easily used by any user, to make his choices of the type of fluid coloring product he wants to obtain from the machine 60, as will be described in more detail hereafter.

The data input means 50 are connected to the central control unit 59 (fig. 2), which is configured and programmed to selectively control and command not only the verification device 10, but also the delivery device 21, the mixing device 22 and the transfer means 30.

In this case, the verification device 10 is located in correspondence with the loading station 25 to verify the receptacle 11 positioned by the user on the loading plate 26 and the correct positioning of the receptacle 11 on the corresponding seating 27.

The method with which the verification device 10 as described heretofore is used in the machine 60 is as follows.

First of all, there is a step in which the user, by means of the data input means 50, chooses and selects the characteristics of the specific fluid product that he intends to purchase. In particular, the interactive screen 51, for example divided into three parts (fig. 3), has the possibility of choosing, by means of four buttons top left, one of the four paint bases, that is, type A (paint for interiors), type B (paint for exteriors), type C (paint for wood), or type D (paint for metals). By means of another four buttons, positioned top right, the user can choose the size or capacity of the receptacle 11 (for example 0.5 liters, 1.0 liters, 2.5 liters or 5.0 liters). Finally, he can choose the type and shade of the color desired, using one of the buttons, each one colored a different shade, located in the lower half of the interactive screen 51.

When the user has completed this step of choosing the fluid coloring product, the machine 60 automatically carries out a printing step, during which the label printer 52 (fig. 1) issues an adhesive label, which has on it the characteristics chosen by the user, in a manner legible for the user (fig. 4), for example: color red; color code 2-15-3; type A, capacity of the receptacle 2.5 liters. The label also has a corresponding bar code and, on the right, a colored rectangle with the shade of color chosen.

The user is then invited to pick up, for example from a shelf (fig. 5) divided into four compartments (A, B, C and D), the type of receptacle 11 that contains the paint base (A, B, C and D) and that has the capacity he has chosen, and to position it in the loading station 25 (fig. 2), centering it on the corresponding seating 27 (fig. 6) of the loading plate 26. Each receptacle 11, on a peripheral surface, has impressed a corresponding bar code, identifying its characteristics and content, or an RFID tag.

The user is also invited to insert into the electronic reader 53 of bar codes or RFID tags (fig. 1) the label previously printed by the label printer 52.

Optionally, the user can pay for the purchase of the fluid coloring product chosen using the electronic payment device 55.

The access door 29 (figs. 2 and 7) is closed and the verification device 10 is activated, under the command of the central control unit 59.

The verification device 10 (fig. 6) automatically verifies that the container 11 is the type chosen by the user, by means of the electronic reader 63 of bar codes or RFID tags, and also that it is centered in the corresponding seating 27, by means of the position sensors 61 and 62.

In order to do this, the loading plate 26 is made to rotate, in this case by one complete revolution, around the vertical axis Z1 by the electric motor 67, by means of the toothed pinion 66 and the toothed wheel 65.

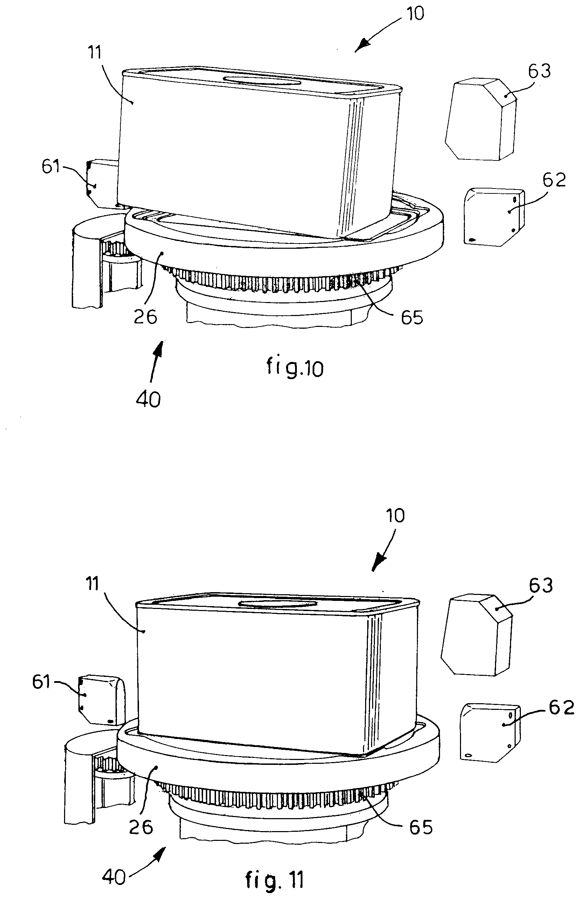

If the verification device 10 detects the presence of an error in the type of receptacle 11 introduced into the loading station 25 and/or in its centering, the user is invited to correct it. On the contrary, if the verification step gives a positive result, the central control unit 59 commands the subsequent steps of delivering and preparing the desired final product. Fig. 10 shows the case of a positive result of the verification, while fig. 11 shows the case of a negative result, where the receptacle 11 is positioned incorrectly.

It is clear that modifications and/or additions of parts may be made to the verification device 10 and the relative method as described heretofore, without departing from the field and scope of the present invention.

For example, the configuration of the sensor means 61, 62 may be varied, providing three or more sensors.

For example, the use of three sensors may be provided, for example located at 120° from each other.

## Claims

1. Verification device to verify at least the type of a closed receptacle (11) and the correct positioning of said receptacle (11) in a machine at least for the automatic delivery of at least a fluid product in said receptacle (11), **characterized in that** it comprises:
- a loading plate (26) for said receptacle (11), the loading plate (26) being provided with a plurality of housing and centering seatings in order to center said receptacle (11), of decreasing sizes from the periphery toward the center;
- rotation means (40) able to determine a rotation of said loading plate (26) around its vertical central axis (Z1) of symmetry;
- position sensor means (61, 62) comprising at least two position sensors (61, 62) disposed in fixed positions on diametrically opposite sides with respect to the vertical axis Z1, just above the loading plate 26, said position sensors (61, 62) being suitable to detect the position and verify the centering of the receptacle (11) disposed on the loading plate (26) and to transmit a relative signal, said position sensor (61, 62) being suitable at least to measure the distance between the walls of the receptacle (11) which, on each occasion, arrives facing said position sensor (61, 62) during the rotation and said position sensor (61, 62), in order to determine at least a profile or shape of the receptacle (11), the volume of the receptacle (11), understood as the external geometric shape of the receptacle (11), being completely read and determined by the position sensor means (61, 62);
- control means (59) able to coordinate the functioning both of the rotation means (40) and also of the position sensor (61, 62) in order to derive, from the signals received from said position sensor (61, 62), at least the actual shape and position of the receptacle (11) disposed on the loading plate (26) and to carry out a comparison between the signals received from the position sensor (61, 62) and information relating at least to the expected shape and position of the receptacle (11) and relating to its content pre-loaded by the user on each occasion and/or found automatically in order to selectively command subsequent work steps on the basis of the result of said comparison;
- electronic reading means (63), controlled by the control means (59), to read an identification code bearing information relating to the receptacle (11) and its content, applied on said receptacle (11).

2. Device as in claim 1, **characterized in that** the rotation determined by the rotation means (40) is of at least 360°.

3. Device as in any claim hereinbefore, **characterized in that** said rotation means (40) comprise an idle transmission member (65) connected temporarily to a drive member (66).

4. Device as in claim 3, **characterized in that** the idle transmission member comprises a toothed wheel (65), attached coaxially to the lower part of the loading plate (26) and temporarily engaging with a toothed pinion (66) which acts as a drive member, in turn keyed onto the shaft of a motor (67), commanded by the control means (59).

5. Device as in any claim hereinbefore, **characterized in that** an access door (29) is disposed around the loading plate (26) and coaxial with the axis (Z1), semi-circular in shape and comprising two panels (29a, 29b) each of which has an angular development of 90°, so as to define a bushing rotating around the vertical axis (Z1), and to prevent in any case the user from introducing his hands or other inside the machine, beyond the loading station (25).

6. Method to verify at least the type of a closed receptacle (11) and the correct positioning of said receptacle (11), used in a machine at least for the automatic delivery of at least a fluid product in said receptacle (11), by means of a device as in any claim hereinbefore, **characterized in that** it comprises:
- a step of loading the receptacle (11) on a loading plate (26);
- a step of rotating said loading plate (26) on which the receptacle (11) is disposed, around its vertical central axis of symmetry (Z1);
- an automatic step of detecting the position of the receptacle (11) on the loading plate (26), carried out during the course of the rotation step, in which position sensor means (61, 62) are used suitable at least to measure the distance between the wall of the receptacle (11) which on each occasion arrives facing toward said position sensor means (61, 62) during the rotation and said position sensor means (61, 62) in order to determine a profile of the receptacle (11);
- a step in which, from signals received from said position sensor means (61, 62), at least the actual shape and position of the receptacle (11) disposed on the loading plate (26) are derived;
- an automatic comparison step between pre-loaded or found information relating at least to the expected shape and position of the receptacle (11) and its content and the position of the receptacle (11) detected in the automatic detection step, on the basis of which comparison the subsequent work steps are selectively commanded.

7. Method as in claim 6, **characterized in that** it also comprises a step of reading an identification code associated with the receptacle (11) in order to derive information relating to the receptacle (11) and its content, wherein said automatic comparison step is carried out between said information found in the reading step and the position of the receptacle (11) detected in the automatic detection step.

## Patentansprüche

1. Prüfvorrichtung zur Überprüfung mindestens des Typs eines geschlossenen Behälters (II) und der korrekten Positionierung dieses Behälters (II) in einer Maschine, die zumindest zur automatischen Abgabe wenigstens eines flüssigen Produkts in diesen Behälter (II) konzipiert ist, **dadurch gekennzeichnet, dass** die Vorrichtung umfasst:
- eine Beladeplatte (26) für den Behälter (II), wobei die Beladeplatte (26) mit mehreren Aufnahme- und Zentriersitzen zur Zentrierung des Behälters (II) versehen ist, deren Größen von der Peripherie zur Mitte hin abnehmen;
- Rotationsmittel (40), die imstande sind, eine Rotation der Beladeplatte (26) um deren vertikale mittlere Symmetrieachse (ZI) herum festzulegen,
- Positionssensormittel (6I, 62), die mindestens zwei Positionssensoren (6I, 62) umfassen, die an festen Positionen auf diametral entgegengesetzten Seiten in Bezug auf die vertikale Achse ZI unmittelbar oberhalb der Beladeplatte (26) angeordnet sind, wobei die Positionssensoren (6I, 62) imstande sind, die Position zu detektieren und die Zentrierung des auf der Beladeplatte (26) angeordneten Behälters (II) zu überprüfen und ein relatives Signal zu übermitteln, wobei die Positionssensoren (6I, 62) imstande sind, zumindest den Abstand zwischen den Wänden des Behälters (II), der jedes Mal während der Rotation gegenüber dem Positionssensor (6I, 62) ankommt, und dem Positionssensor (6I, 62) zu messen, um wenigstens ein Profil oder eine Form des Behälters (II) zu bestimmen, wobei das Volumen des Behälters (II), das als äußere geometrische Form des Behälters (II) verstanden wird, durch die Positionssensormittel (6I, 62) vollständig gelesen und bestimmt wird;
- Steuerungsmittel (59), die imstande sind, die Funktionsweise sowohl der Rotationsmittel (40) als auch des Positionssensors (6I, 62) zu koordinieren, um anhand der Signale, die von dem Positionssensor (6I, 62) empfangen werden, zumindest die vorliegende Form und Position des auf der Beladeplatte (26) angeordneten Behälters (II) abzuleiten und einen Vergleich zwischen den von dem Positionssensor (6I, 62) empfangenen Signalen und der Information in Bezug auf zumindest die erwartete Form und Position des Behälters (II) und in Bezug auf dessen Inhalt, mit dem er von dem Benutzer jedes Mal beladen wurde und/oder der automatisch festgestellt wurde, durchzuführen, um auf Grundlage des Ergebnisses dieses Vergleichs selektiv Befehle für nachfolgende Arbeitsschritte auszugeben;
- elektronische Lesemittel (63), die durch die Steuerungsmittel (59) gesteuert werden, um einen Identifizierungscode zu lesen, der Information in Bezug auf den Behälter (II) und seinen Inhalt trägt und auf dem Behälter (II) angebracht ist.

2. Vorrichtung gemäß Anspruch I, **dadurch gekennzeichnet, dass** die Rotation, die durch die Rotationsmittel (40) festgelegt wird, mindestens 360° beträgt.

3. Vorrichtung gemäß irgendeinem der vorhergehenden Ansprüche, **dadurch gekennzeichnet, dass** die Rotationsmittel (40) ein leerlaufendes Übertragungselement (65) umfassen, das temporär mit einem Antriebselement (66) verbunden ist.

4. Vorrichtung gemäß Anspruch 3, **dadurch gekennzeichnet, dass** das leerlaufende Übertragungselement ein Zahnrad (65) umfasst, das koaxial an dem unteren Teil der Beladeplatte (26) befestigt ist und temporär in ein Zahnritzel (66) eingreift, das als Antriebselement fungiert, welches wiederum auf die Welle eines durch die Steuerungsmittel (59) gesteuerten Motors (67) gekeilt ist.

5. Vorrichtung gemäß irgendeinem der vorhergehenden Ansprüche, **dadurch gekennzeichnet, dass** eine Zugangstür (29) um die Beladeplatte (26) herum und koaxial mit der Achse (ZI) angeordnet ist, welche halbkreisförmig ist und zwei Paneele (29a, 29b) umfasst, die sich jeweils in einem Winkel von 90° erstrecken, so dass sie eine um die vertikale Achse (ZI) rotierende Buchse bilden und in jedem Fall verhindern, dass der Benutzer seine Hände oder Anderes in das Innere der Maschine jenseits der Ladestation (25) einführt.

6. Verfahren zur Überprüfung mindestens des Typs eines geschlossenen Behälters (II) und der korrekten Positionierung des Behälters (II), welcher in einer Maschine verwendet wird, die zumindest zur automatischen Abgabe wenigstens eines flüssigen Produkts in diesen Behälter (II) konzipiert ist, mittels einer Vorrichtung gemäß irgendeinem der vorhergehenden Ansprüche, **dadurch gekennzeichnet, dass** das Verfahren umfasst:
- einen Schritt des Beladens des Behälters (II) auf einer Beladeplatte (26);
- einen Schritt des Rotierens der Beladeplatte (26), auf der der Behälter (II) angeordnet ist, um dessen vertikale zentrale Symmetrieachse (ZI) herum;
- einen automatischen Schritt des Detektierens der Position des Behälters (II) auf der Beladeplatte (26), der während des Rotationsschritts durchgeführt wird und in dem Positionssensormittel (6I, 62) verwendet werden, die imstande sind, zumindest den Abstand zwischen der Wand des Behälters (II), der jedes Mal während der Rotation gegenüber den Positionssensormitteln (6I, 62) ankommt, und den Positionssensormitteln (6I, 62) zu messen, um ein Profil des Behälters (II) zu bestimmen;
- einen Schritt, in dem anhand der Signale, die von den Positionssensormitteln (6I, 62) erhalten werden, zumindest die vorliegende Form und Position des auf der Beladeplatte (26) angeordneten Behälters (II) abgeleitet werden;
- einen automatischen Vergleichsschritt, in dem zwischen vorinstallierter oder gefundener Information in Bezug auf zumindest die erwartete Form und Position des Behälters (II) und seinen Inhalt und der Position des Behälters (II), die in dem automatischen Detektionsschritt detektiert wurde, verglichen wird, und auf der Grundlage des Vergleichs selektiv Befehle für die nachfolgenden Arbeitsschritte ausgegeben werden.

7. Verfahren gemäß Anspruch 6, **dadurch gekennzeichnet, dass** es außerdem einen Schritt des Lesens eines mit dem Behälter (II) verbundenen Identifizierungscodes umfasst, um Information bezüglich des Behälters (II) und dessen Inhalt abzuleiten, wobei der automatische Vergleichsschritt zwischen der in dem Leseschritt erlangten Information und der in dem automatischen Detektionsschritt detektierten Position des Behälters (II) durchgeführt wird.

## Revendications

1. Dispositif de vérification pour vérifier au moins le type d'un récipient fermé (11) et le positionnement correct dudit récipient (11) dans une machine au moins pour la distribution automatique d'au moins un produit fluide dans ledit récipient (11), **caractérisé en ce qu'**il comporte :
- une plaque de chargement (26) pour ledit récipient (11), la plaque de chargement (26) étant munie d'une pluralité d'assises de logement et de centrage afin de centrer ledit récipient (11), de tailles décroissantes de la périphérie vers le centre ;
- des moyens de rotation (40) capables de déterminer une rotation de ladite plaque de chargement (26) autour de son axe central vertical (Z1) de symétrie ;
- des moyens à capteurs de position (61, 62) comprenant au moins deux capteurs de position (61, 62) disposés dans des positions fixes sur des côtés diamétralement opposés par rapport à l'axe vertical Z1, juste au-dessus de la plaque de chargement (26), lesdits capteurs de position (61, 62) étant aptes à détecter la position et à vérifier le centrage du récipient (11) disposé sur la plaque de chargement (26) et à transmettre un signal relatif, ledit capteur de position (61, 62) étant apte à mesurer au moins la distance entre les parois du récipient (11) qui arrivent chaque fois face audit capteur de position (61, 62) pendant la rotation et ledit capteur de position (61, 62), afin de déterminer au moins un profil ou une forme du récipient (11), le volume du récipient (11), compris comme la forme géométrique extérieure du récipient (11), est complètement lu et déterminé par le moyen à capteurs de position (61, 62) ;
- des moyens de commande (59) capables de coordonner le fonctionnement des moyens de rotation (40) et également du capteur de position (61, 62) afin de déduire, à partir des signaux reçus dudit capteur de position (61, 62), au moins la forme et la position réelles du récipient (11) disposé sur la plaque de chargement (26) et d'effectuer une comparaison entre les signaux reçus du capteur de position (61, 62) et des informations relatives au moins à la forme et à la position attendues du récipient (11) et relatives à son contenu préchargées à chaque fois par l'utilisateur et/ou trouvées automatiquement afin d'ordonner de manière sélective des étapes de travail ultérieures sur la base du résultat de ladite comparaison ;
- des moyens de lecture électronique (63), commandés par les moyens de commande (59), pour lire un code d'identification portant des informations relatives au récipient (11) et à son contenu, appliqué sur ledit récipient (11).

2. Dispositif selon la revendication 1, **caractérisé en ce que** la rotation déterminée par les moyens de rotation (40) est d'au moins 360°.

3. Dispositif selon l'une quelconque des revendications précédentes, **caractérisé en ce que** lesdits moyens de rotation (40) comprennent un élément de transmission au ralenti (65) connecté temporairement à un élément d'entraînement (66).

4. Dispositif selon la revendication 3, **caractérisé en ce que** l'élément de transmission au ralenti comprend une roue dentée (65), fixée coaxialement à la partie inférieure de la plaque de chargement (26) et engrenant temporairement avec un pignon denté (66) qui agit comme un élément d'entraînement, verrouillé à son tour sur l'arbre d'un moteur (67), commandé par les moyens de commande (59).

5. Dispositif selon l'une quelconque des revendications précédentes, **caractérisé en ce qu'**une porte d'accès (29) est disposée autour de la plaque de chargement (26) et coaxiale à l'axe (Z1), de forme semi-circulaire et comportant deux panneaux (29a, 29b) dont chacun a un développement angulaire de 90°, de manière à définir une bague tournant autour de l'axe vertical (Z1), et à empêcher en tout état de cause l'utilisateur d'introduire ses mains ou autre à l'intérieur de la machine, au-delà du poste de chargement (25).

6. Méthode pour vérifier au moins le type d'un récipient fermé (11) et le positionnement correct dudit récipient (11), utilisée dans une machine au moins pour la distribution automatique d'au moins un produit fluide dans ledit récipient (11), au moyen d'un dispositif selon l'une quelconque des revendications précédentes, **caractérisée en ce qu'**elle comprend :
- une étape de chargement du récipient (11) sur une plaque de chargement (26) ;
- une étape de rotation de ladite plaque de chargement (26) sur laquelle est disposé le récipient (11), autour de son axe de symétrie central vertical (Z1) ;
- une étape automatique de détection de la position du récipient (11) sur la plaque de chargement (26), réalisée au cours de l'étape de rotation, durant laquelle sont utilisés des moyens à capteurs de position (61, 62) aptes au moins à mesurer la distance entre la paroi du récipient (11) qui arrive à chaque fois face auxdits moyens à capteurs de position (61, 62) pendant la rotation et lesdits moyens à capteurs de position (61, 62) afin de déterminer un profil du récipient (11)
- une étape durant laquelle, à partir de signaux reçus desdits moyens à capteurs de position (61, 62), au moins la forme et la position réelles du récipient (11) disposé sur la plaque de chargement (26) sont déduites ;
- une étape de comparaison automatique entre des informations préchargées ou trouvées concernant au moins la forme et la position attendues du récipient (11) et son contenu et la position du récipient (11) détectée lors de l'étape de détection automatique, comparaison sur la base de laquelle les étapes de travail ultérieures sont ordonnées.

7. Méthode selon la revendication 6, **caractérisée en ce qu'**elle comprend en outre une étape de lecture d'un code d'identification associé au récipient (11) afin de déduire des informations relatives au récipient (11) et à son contenu, dans laquelle ladite étape de comparaison automatique est effectuée entre lesdites informations trouvées durant l'étape de lecture et la position du récipient (11) détectée durant l'étape de détection automatique.
